# EUROPÄISCHE PATENTANMELDUNG

(11) **EP 0 753 597 A2**
(43) Veröffentlichungstag der Anmeldung: **15.01.1997**
(21) Anmeldenummer: 96109632.8
(22) Anmeldetag: 25.06.1996
(51) Int. Cl.: C22C 38/22, F16F 1/14, C21D 9/08

(54) **Rohre für die Herstellung von Stabilisatoren und Herstellung von Stabilisatoren aus solchen Rohren**

(30) Priorität: 06.07.1995 DE 19524576
(71) Anmelder: BENTELER AG, D-33104 Paderborn (DE)
(72) Erfinder: Beer, Gerhard, Dipl.-Ing., 33104 Paderborn (DE); Bergs, Norbert, Dipl.-Ing., 33161 Hövelhof (DE); Klatzer, Stefan, Dr. Dipl.-Ing., 33104 Paderborn (DE); Töpker, Dieter, Dr. Dipl.-Ing., 33100 Neuenbeken (DE); Vaubel, Gert, Dr. rer.nat.habil., 34414 Warburg-Welda (DE)
(74) Vertreter: Ksoll, Peter, Dr.-Ing.

(57) **Zusammenfassung**

Die Erfindung betrifft die Verwendung einer Stahllegierung für Rohre zur Herstellung von Stabilisatoren für Kraftfahrzeuge, einen Stabilisator aus einer solchen Stahllegierung sowie Verfahren zur Herstellung von Stabilisatoren. Ausgehend von den Anforderungen an die mechanischen Eigenschaften, wonach die Zugfestigkeit Rₘ ≧ 1100 N/mm², die 0,2%-Dehngrenze R_{P0,2} ≧ 900 N/mm² und die Bruchdehnung A₅ ≧ 6 % sein sollen sowie der Notwendigkeit einer wirtschaftlichen Herstellung von Stabilisatoren wird die Verwendung einer Stahllegierung für Rohre zur Herstellung der Stabilisatoren vorgeschlagen, die in Gewichtsprozent ausgedrückt aus
Kohlenstoff (C) 0,12 % bis 0,25 %
Silizium (Si) 0,10 % bis 0,40 %
Mangan (Mn) 1,30 % bis 2,00 %
Phosphor (P) max. 0,025 %
Schwefel (S) max. 0,025 %
Chrom (Cr) 1,60 % bis 2,50 %
Molybdän (Mo) 0,40 % bis 1,00 %
Aluminium (Al) 0,010 % bis 0,050 %
Rest Eisen einschließlich erschmelzungsbedingter Verunreinigungen
besteht. Der vorgeschlagene Rohrwerkstoff wird den Anforderungen an die mechanischen Eigenschaften gerecht. Darüber hinaus zeichnet er sich durch eine gute Verformbarkeit und sein Zähigkeitsverhalten aus. Eine zusätzliche Vergütung ist nicht erforderlich. Da der Werkstoff schweißbar ist, kann er neben der Verwendung für nahtlose Rohre auch zur Herstellung von längsnahtgeschweißten Rohren eingesetzt werden, die für den vorgesehenen Verwendungszweck als Ausgangsprodukt für Stabilisatoren besser geeignet sind.

## Beschreibung

Die Erfindung betrifft die Verwendung einer Stahllegierung für Rohre zur Herstellung von Stabilisatoren für Kraftfahrzeuge, einen Stabilisator aus einer solchen Stahllegierung sowie Verfahren zur Herstellung von Stabilisatoren.

Stabilisatoren sind Bauteile, die in der Kraftfahrzeugtechnik zur Verringerung der Kurvenneigung der Karosserie und zur Beeinflussung des Eigenlenkverhaltens, z.B. zur Verminderung des Übersteuerns, eingesetzt werden. Sie versteifen bei einseitiger Belastung die Federung, beispielsweise beim Überfahren einseitiger Hindernisse.

Stabilisatoren sind meist als Drehstäbe ausgeführt, die im Fahrzeughauptteil quer zur Fahrtrichtung gelagert sind und über U-förmig angebrachte Schenkel an den Radaufhängungen angreifen. Zur Stabilisation macht man sich die Widerstandskraft des Materials gegen Verdrehung zunutze. Die Enden des Stabilisators sind jeweils starr mit einer Seite der Achse verbunden und wirken als Hebelarm. Wird der Fahrzeugaufbau bei Kurvenfahrt infolge der Fliehkraft zur Seite geneigt, so federt das kurveninnere Rad stärker ein als das äußere. Der Stabilisator wird dadurch verdrillt und wirkt durch seine Federkraft der Seitenneigung entgegen.

Stabilisatoren der üblichen Art werden bisher überwiegend aus Vollstäben gefertigt. Es gibt sie in geraden und gebogenen Ausführungen. So beschreibt beispielsweise die WO 93/18189 die Herstellung von Schwingstäben bzw. Drehstabilisatoren aus hochfesten Stählen. Hierbei erfolgt der Einsatz von Stählen mit einem orientierten Verlauf der Gefügestruktur. Die Umformung erfolgt entweder warm unterhalb der Rekristallisierungstemperatur oder kalt unterhalb einer Temperatur von 149 °C. Die dort beschriebenen Stähle besitzen eine Streckgrenze Rₑ von mindestens 620 N/mm² und eine Zugfestigkeit Rₘ von mindestens 827 N/mm². Sie weisen einen Gehalt an Kohlenstoff von 0,3 % bis 1 %, Mangan von 2,0 % bis 2,5 % und bis zu 0,35 % Vanadium auf. Die zur Herstellung der Stabilisatoren eingesetzten Stäbe werden warmgewalzt oder kaltgezogen.

Aus Gründen der Gewichtsersparnis geht die Tendenz dazu, Stabilisatoren aus Rohren herzustellen. Hierbei macht man sich das bei einem Rohr günstigere Verhältnis von Widerstandsmoment gegen Torsion zur Rohrmasse im Vergleich zu einem Vollstab zunutze. Bei dem für die Torsion optimalen Verhältnis von Wanddicke zum Durchmesser der Rohre müssen die zur Anwendung gelangenden Werkstoffe bei Beibehaltung der in den Fahrzeugen konstruktiv vorgegebenen bzw. verwendbaren Außendurchmesser eine um einen Faktor von ca. 1,4 höhere Streckgrenze und Zugfestigkeit besitzen.

Zur Erzielung einer hohen Dauer-Wechselfestigkeit ist die Oberflächengüte der Außen- und Innenoberfläche der verwendeten Rohre von größter Wichtigkeit. Die beste Oberflächengüte weisen längsnahtgeschweißte Rohre aus gewalztem Stahlband auf. Hierbei werden die bei nahtlos gezogenen Rohren vorkommenden Fehler, wie Fältelungen usw. vermieden.

Die bislang zum Einsatz gelangenden Stähle für Rohre zur Herstellung von Stabilisatoren weisen einen hohen Kohlenstoffgehalt auf und haben zum Teil eine zu niedrige Zähigkeit. Die niedrige Zähigkeit der Stähle wirkt sich insbesondere bei nahtlosen Rohren vorwiegend aufgrund der verminderten Oberflächengüte negativ auf die Dauer-Wechselfestigkeit aus. Zur Erzielung höherer Zähigkeit bei der geforderten Festigkeit sind aufwendige Vergütungsverfahren mit hohen Anlaßtemperaturen von ca. 600 °C notwendig. Durch die hohen Anlaßtemperaturen ist es aber erforderlich, daß die Stabilisatoren während des Anlaßvorgangs zur Vermeidung von Verzug in besonderen Vorrichtungen eingespannt werden. Dieser Aufwand führt jedoch zu einer Erhöhung der Herstellungskosten.

Desweiteren sind die meisten der bislang eingesetzten Stähle schlecht schweißbar. Damit ist der Einsatz von längsnahtgeschweißten Rohren schlecht bzw. überhaupt nicht möglich, obwohl dies wegen der besseren Oberflächengüte wünschenswert wäre.

Der Erfindung liegt daher die Aufgabe zugrunde, eine Stahllegierung für Rohre anzugeben, die in ihren mechanischen Eigenschaften den hohen Anforderungen für die Herstellung von Stabilisatoren gerecht wird. Weiterhin zielt die Erfindung auf eine wirtschaftliche Herstellung von qualitativ hochwertigen Stabilisatoren aus solchen Rohren ab.

Der legierungstechnische Teil der Aufgabe wird durch die Verwendung der im Anspruch 1 angegebenen Legierung gelöst.

Eine vorteilhafte Ausgestaltung der zur Verwendung gelangenden Legierung lehrt Anspruch 2.

Die Erfindung macht sich hierbei die Erkenntnis zu eigen, daß für die Herstellung von Stabilisatoren aus Rohren bei den hohen Anforderungen an die mechanischen Eigenschaften ein Rohrwerkstoff erforderlich ist, der eine Zugfestigkeit Rₘ ≧ 1100 N/mm², eine 0,2%-Dehngrenze R_{p0,2} ≧ 900 N/mm² und eine Bruchdehnung A₅ ≧ 6 % aufweist. Der wesentlichste Vorteil der erfindungsgemäßen Stahllegierung wird daher darin gesehen, daß die vorgeschlagene Legierung gegenüber der Verwendung der bekannten Legierungen, aus denen Rohre für Stabilisatoren hergestellt werden, die angegebenen Werte der Zugfestigkeit, Streckgrenze und Bruchdehnung erreicht. Desweiteren sind die Rohre aus der erfindungsgemäßen Legierung insbesondere für jene Hersteller von Stabilisatoren interessant, die über keine Vergütungsanlage verfügen, da eine spezielle Vergütung nicht erforderlich ist.

Die Legierungskomponenten sind hierfür optimal aufeinander abgestimmt.

Obwohl es sich um einen weichen, kohlenstoffarmen Stahl handelt, gewährleistet der Kohlenstoffanteil eine ausreichende Festigkeit und Härtbarkeit. Der Siliziumanteil bestimmt die Zugfestigkeit und die Streckgrenze, wobei die Zähigkeitseigenschaften nur geringfügig beeinflußt werden. Das Mangan erhöht ebenfalls die Festigkeit der Stahllegierung, wobei die Bruchdehnung nur geringfügig verringert wird. Darüberhinaus wirkt sich das Mangan günstig auf die Schweißbarkeit aus. In Verbindung mit dem Kohlenstoffanteil bewirkt es eine Verbesserung des Verschleißwiderstands. Chrom erhöht wiederum die Festigkeit, wobei es die Dehnung nur geringfügig herabsetzt. Das Molybdän erhöht die Zugfestigkeit und besonders die Warmfestigkeit und wirkt sich günstig auf die Schweißbarkeit aus. Schließlich wird durch die Zugabe von Aluminium die Feinkornbildung unterstützt.

Durch die auch mögliche Zulegierung von Vanadium kann darüberhinaus die Warmfestigkeit verbessert und die Überhitzungsempfindlichkeit unterdrückt werden. Auch die Zugfestigkeit und die Streckgrenze werden hierdurch erhöht.

Bei der erfindungsgemäßen Legierung ist daher eine gute Verformbarkeit und Schweißbarkeit gegeben. Hiermit verbindet sich der Vorteil, daß neben dem Einsatz von nahtlosen Rohren auch der Einsatz von für den vorgesehenen Verwendungszweck besser geeigneten längsnahtgeschweißten Rohren möglich wird.

Die erfindungsgemäße Stahllegierung weist im Vergleich zu den bekannten Stählen bessere Eigenschaften hinsichtlich der Zähigkeit auf. Eine zusätzliche Vergütung ist nicht erforderlich. Eine Abkühlung an Luft ergibt die erforderlichen mechanischen Eigenschaften.

Die erfindungsgemäße Stahllegierung ist kostengünstig. Rohre aus einer solchen Stahllegierung können auch in bereits vorhandenen Anlagen zur Herstellung von Stabilisatoren aus Vollmaterial problemlos zum Einsatz gelangen.

Bei neuen Fertigungslinien brauchen Vergütungsanlagen nicht installiert zu werden.

Stabilisatoren gemäß Anspruch 3 weisen ein gegenüber bekannten Stabilisatoren aus Vollmaterial reduziertes Gewicht auf. Den starken Belastungen beim Einsatz in Kraftfahrzeugen halten diese Stabilisatoren zuverlässig stand.

Eine Lösung des verfahrensmäßigen Teils der Aufgabe wird in den Merkmalen des Anspruchs 4 gesehen. Hierbei können sowohl nahtlos gezogene als auch längsnahtgeschweißte Rohre zum Einsatz gelangen.

Diese werden zunächst weichgeglüht. Dies geschieht bei Temperaturen im Bereich um den A_{C1}-Punkt im Eisen-Kohlenstoff-Diagramm mit dem Ziel, die Rohre in ihrem Formänderungsvermögen zu verbessern. Danach wird langsam abgekühlt, um einen möglichst spannungsarmen Zustand zu erzielen. Grundsätzlich ist auch ein Pendelglühen möglich, bei dem ein mehrmaliges kurzzeitiges Überschreiten von A_{C1} vorgenommen wird.

Aus den so behandelten Rohren werden anschließend Stabilisatoren umformtechnisch mit den üblichen Verfahrensgängen hergestellt. Hieran schließt sich eine Lufthärtung der Stabilisatoren an. Die Lufthärtung erfolgt vorzugsweise im Werkzeug selber, so daß ein zusätzliches Aufnehmen der Stabilisatoren zum Zwecke der Härtung entfällt.

Zur Erzielung der mechanischen Eigenschaften werden zur Herstellung gerader Stabilisatoren Rohre im luftvergüteten Zustand eingesetzt. Erforderlichenfalls werden die Enden der Stabilisatoren angestaucht (Anspruch 5). Nach dem Anstauchen der Enden oberhalb einer Temperatur von 850 °C stellen sich bei Abkühlung an Luft die geforderten mechanischen Eigenschaften ein.

Für gebogene Stabilisatoren können gemäß Anspruch 6 vorher luftvergütete Rohre eingesetzt werden, wenn beim Biegen eine Erwärmung auf eine Temperatur oberhalb von 850 °C nur im Bogenbereich erfolgt. Nach dem Biegevorgang und der Abkühlung an der Luft weisen die gebogenen Stabilisatoren über ihre gesamte Länge homogene mechanische Eigenschaften auf.

Im Falle von gebogenen Stabilisatoren können auch unvergütete Rohre zum Einsatz kommen, wie dies Anspruch 7 vorsieht. Das Biegen erfolgt bei einer Temperatur oberhalb von 800 °C. Als besonders vorteilhaft hat sich jedoch eine Temperatur oberhalb von 850 °C herausgestellt. Die Abkühlung an Luft ergibt die geforderten mechanischen Eigenschaften. Ein zusätzliches Vergüten ist nicht erforderlich.

Damit ist die eingangs beschriebene erfindungsgemäße Stahllegierung besonders für jene Hersteller von Stabilisatoren interessant, die keine Vergütungsanlage besitzen. Zusätzliche Investitionen für eine Vergütungsanlage brauchen nicht aufgewandt zu werden.

Eine weitere Lösung des verfahrensmäßigen Teils der Aufgabe beinhaltet Anspruch 8. Danach werden die aus der erfindungsgemäßen Legierung hergestellten Rohre vor dem Umformvorgang zu Stabilisatoren vergütet. Eine Vergütung nach dem Biegen kann entfallen. Diese Vorgehensweise ist besonders phragmatisch und ökonomisch.

Die Vergütung der Rohre umfaßt den Doppelschritt des Härtens und Anlassens. Dem Rohr wird hierdurch vor dem Biegevorgang eine große Festigkeit und eine hohe Streckgrenze sowie große Zähigkeit verliehen. Das Härten besteht aus dem Erwärmen auf Härtetemperatur, dem Halten und Abschrecken. Danach wird zum Anlassen nochmals erwärmt und abschließend abgeschreckt oder langsam abgekühlt.

Falls erforderlich, kann nach dem Biegen der Rohre zu Stabilisatoren ein Spannungsarmglühen vorgenommen werden, wie dies Anspruch 9 vorsieht. Hierdurch können Gefügeumwandlungen oder Eigenspannungen abgebaut werden. Vorzugsweise beschränkt sich dieser Glühvorgang auf den Bereich der Bögen eines Stabilisators. Die Glühtemperatur ist dabei so gewählt, daß die Vergütungsfestigkeit des Stabilisators nicht herabgesetzt wird.

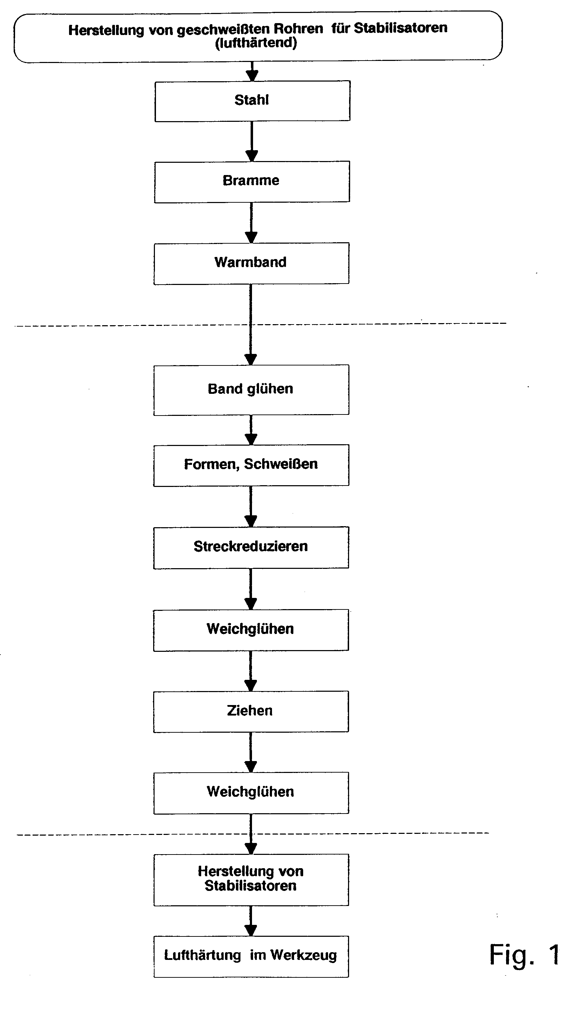

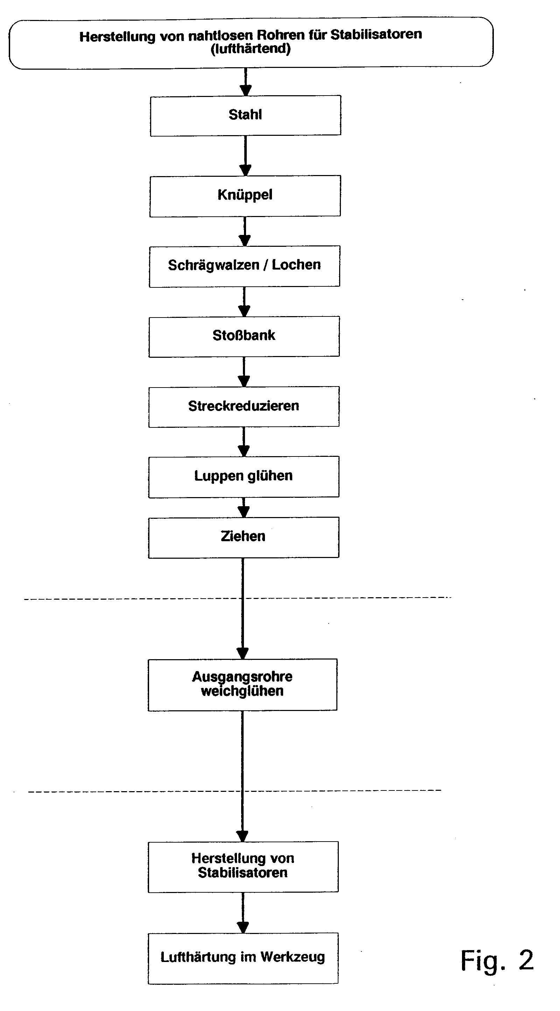

Eine Fertigungslinie für die Herstellung von Stabilisatoren aus geschweißten Rohren sowie eine Fertigungslinie für die Herstellung von Stabilisatoren aus nahtlosen Rohren gemäß dem erfindungsgemäßen Verfahren ist beispielhaft in den beiliegenden Figuren 1 und 2 dargestellt. Bezüglich der Figur 1 ist darauf hinzuweisen, daß bei geschweißten Rohren in Abhängigkeit von deren Durchmesser ein Streckreduzieren nicht zwingend erforderlich ist.

## Patentansprüche

1. Verwendung einer Stahllegierung für Rohre zur Herstellung von Stabilisatoren für Kraftfahrzeuge, insbesondere Drehstabilisatoren, die in Gewichtsprozenten ausgedrückt aus
Kohlenstoff (C) 0,12 % bis 0,25 %
Silizium (Si) 0,10 % bis 0,40 %
Mangan (Mn) 1,30 % bis 2,00 %
Phosphor (P) max. 0,025 %
Schwefel (S) max. 0,025 %
Chrom (Cr) 1,60 % bis 2,50 %
Molybdän (Mo) 0,40 % bis 1,00 %
Aluminium (Al) 0,010 % bis 0,050 %
Rest Eisen einschließlich erschmelzungsbedingter Verunreinigungen
besteht.

2. Verwendung einer Stahllegierung nach Anspruch 1, die in Gewichtsprozenten ausgedrückt aus
Kohlenstoff (C) 0,15 % bis 0,20 %
Silizium (Si) 0,15 % bis 0,30 %
Mangan (Mn) 1,40 % bis 1,80 %
Phosphor (P) max. 0,025 %
Schwefel (S) max. 0,025 %
Chrom (Cr) 1,80 % bis 2,10 %
Molybdän (Mo) 0,40 % bis 0,60 %
Aluminium (Al) 0,015 % bis 0,035 %
Vanadium (V) 0,10 % bis 0,30 %
Rest Eisen einschließlich erschmelzungsbedingter Verunreinigungen
besteht.

3. Stabilisator aus einer Stahllegierung nach einem der Ansprüche 1 oder 2.

4. Verfahren zur Herstellung von Stabilisatoren aus gezogenen oder geschweißten Rohren gemäß Anspruch 1 oder 2, mit folgenden Maßnahmen:
a) Weichglühen der Rohre;
b) Herstellung der Stabilisatoren;
c) Lufthärtung, wobei diese insbesondere im Werkzeug erfolgt.

5. Verfahren nach Anspruch 4, **dadurch gekennzeichnet**, daß ein Anstauchen der Enden bei einer Temperatur oberhalb von 800 °C, insbesondere oberhalb von 850 °C, vorgenommen wird und anschließend eine Abkühlung an Luft erfolgt.

6. Verfahren nach einem der Ansprüche 4 oder 5 zur Herstellung gebogener Stabilisatoren, **dadurch gekennzeichnet**, daß nur im Bogenbereich eine Erwärmung auf eine Temperatur oberhalb von 850 °C vorgenommen wird und nach der Biegeoperation eine Abkühlung an Luft erfolgt.

7. Verfahren zur Herstellung von gebogenen Stabilisatoren aus unvergüteten Rohren gemäß einem der Ansprüche 1 oder 2, **dadurch gekennzeichnet**, daß das Biegen bei einer Temperatur oberhalb von 800 °C, insbesondere oberhalb von 850 °C, vorgenommen wird und anschließend eine Abkühlung an Luft erfolgt.

8. Verfahren zur Herstellung von gebogenen Stabilisatoren aus Rohren gemäß einem der Ansprüche 1 oder 2, **dadurch gekennzeichnet**, daß zunächst eine Vergütung der Rohre vorgenommen wird und diese anschließend zu Stabilisatoren gebogen werden.

9. Verfahren nach Anspruch 8, **dadurch gekennzeichnet**, daß nach dem Biegevorgang ein Spannungsarmglühen der Biegebereiche erfolgt.
